# EUROPÄISCHE PATENTSCHRIFT

(11) **EP 1 364 861 B1**
(45) Veröffentlichungstag und Bekanntmachung des Hinweises auf die Patenterteilung: **19.09.2007**
(21) Anmeldenummer: 03003085.2
(22) Anmeldetag: 13.02.2003
(51) Int. Cl.: B62D 25/16

(54) **Radhausschale für ein Fahrzeug**
Wheelhouse liner
Panneau de couverture de roue

(30) Priorität: 22.05.2002 DE 10222440
(43) Veröffentlichungstag der Anmeldung: 26.11.2003
(73) Patentinhaber: Dr.Ing. h.c. F. Porsche Aktiengesellschaft, 70435 Stuttgart (DE)
(72) Erfinder: Ochs, Jürgen, 71297 Mönsheim (DE)

(56) Entgegenhaltungen:
- DE-A- 19 930 762
- GB-A- 2 144 690
- US-A- 1 704 048
- US-A- 4 735 427

## Beschreibung

Die Erfindung betrifft eine Radhausschale für ein Fahrzeug, die einen mehrlagigen textilen Aufbau aufweist, wobei auf der dem Rad zugewandten Seite der Radhausschale eine Abdeckschicht vorgesehen ist.

Radhausschalen der eingangs genannten Gattung (DE 100 24 496 A1) weisen positive akustische und mechanische Eigenschaften auf, wodurch die Spritzwasser- und Steinschlaggeräusche reduziert werden. Durch den textilen Aufbau wird zudem eine Gewichtsreduzierung erzielt. Die dem Rad zugewandte Abdeckschicht wird bei dieser Anordnung durch ein Polyestervlies gebildet. Nachteilig an dieser Radhausschale ist, daß das Polyestervlies einerseits eine beträchtliche Menge an Wasser aufnimmt und daß andererseits Schmutz auf der relativ rauhen Oberfläche des Polyestervlieses besonders gut haftet. Werden damit ausgerüstete Fahrzeuge z.B. nach einer Fahrt auf unbefestigten Straßen anschließend mit einem Hochdruckreiniger gesäubert, tropft das von der Abdeckschicht der Radausschale aufgenommene Wasser noch einige Zeit ab, was zu unerwünschten Pfützen unter dem Fahrzeug führen kann.

Aufgabe der Erfindung ist es, eine textile Radhausschale der eingangs genannten Art dergestalt weiterzubilden, daß eine Wasser- und Schmutzaufnahme über die dem Rad am nächsten liegende Abdeckschicht vermieden wird.

Erfindungsgemäß wird diese Aufgabe durch die Merkmale des Anspruchs 1 gelöst. Weitere die Erfindung in vorteilhafter Weise ausgestaltenden Merkmale sind in den Unteransprüchen enthalten.

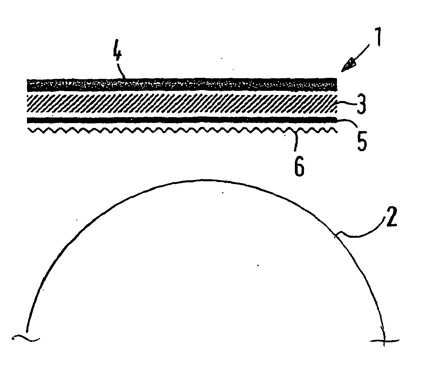

Der wesentliche Vorteil der Erfindung wird darin gesehen, daß durch die Ausbildung der Abdeckschicht aus hydrophobem Gewebe oder Gewirke aus PTFE-Fasern keine Wasser- bzw. Schmutzaufnahme über die Abdeckschicht erfolgt. Die Verbindung dieses Anti-Haft-Oberflächenmaterials mit der eigentlichen Radhausschale erfolgt durch geeignete thermoplastische Kleber oder durch mechanische Fixierung (z.B. (Vernadeln). In der einzigen Figur ist der schematische Aufbau einer mehrlagigen, textilen Radhausschale 1 eines Fahrzeuges dargestellt. Zur Kennzeichnung der Lage ist ein Teilbereich des angrenzenden Rades 2 angedeutet.

Die Radhausschale 1 besteht im Ausführungsbeispiel aus einer relativ dicken eingebetteten Vliesschicht 3, die beiderseits von Schichten 4, 5 umhüllt ist. Der Aufbau einer derartigen Radhausschale ist beispielsweise in der DE 100 24 496 A1 näher beschrieben. Auf der dem Rad 2 zugekehrten Seite ist eine Abdeckschicht 6 angeordnet. Erfindungsgemäß besteht diese Abdeckschicht 6 aus einem hydrophobem Gewebe oder Gewirke aus PTFE-Fasern (Polytetrafluorethylen-Fasern). Derartige Fasern sind allgemein unter der Bezeichnung "Teflon"-Fasern bekannt (Handelsbezeichnung "Teflon" von Du Pont).

Die Verbindung dieses Antihaftoberflächenmaterials mit der eigentlichen Radhausschale 1 erfolgt durch geeignete thermoplastische Kleber oder durch mechanische Fixierung (z.B. Vernadeln).

## Patentansprüche

1. Radhausschale für ein Fahrzeug, die einen mehrlagigen textilen Aufbau aufweist, wobei auf der dem Rad zugewandten Seite der Radhausschale eine wasserabstoßende Abdeckschicht vorgesehen ist, **dadurch gekennzeichnet, daß** die wasserabstoßende Abdeckschicht (6) durch ein Gewebe oder Gewirke aus PTFE-Fasern gebildet wird.

2. Radhausschale nach Anspruch 1, **dadurch gekennzeichnet, daß** die wasserabstoßende Abdeckschicht (6) durch einen thermoplastischen Kleber mit der Radhausschale (1) verbunden ist.

3. Radhausschale nach Anspruch 1, **dadurch gekennzeichnet, daß** die wasserabstoßende Abdeckschicht (6) durch eine mechanische Fixierung (z.B. Vernadeln) mit der Radhausschale (1) verbunden ist.

## Claims

1. A wheel-arch liner for a vehicle, which liner has a multi-layer textile structure, wherein a water-repellent covering layer is provided on the side of the wheel-arch liner facing the wheel, **characterised in that** the water-repellent covering layer (6) is formed by a woven or knitted fabric of PTFE fibres.

2. A wheel-arch liner according to claim 1, **characterised in that** the water-repellent covering layer (6) is connected to the wheel-arch liner (1) by a thermoplastic adhesive.

3. A wheel-arch liner according to claim 1, **characterised in that** the water-repellent covering layer (6) is connected to the wheel-arch liner (1) by mechanical fixing means (e.g. pinning).

## Revendications

1. Coque de passage de roue pour un véhicule, qui comporte une structure textile multicouche, une couche de protection hydrophobe étant prévue sur le côté de la coque de passage de roue, orienté vers la roue, **caractérisée en ce que** la couche de protection (6) hydrophobe est formée par un tissu ou un tricot de fibres PTFE.

2. Coque de passage de roue selon la revendication 1, **caractérisée en ce que** la couche de protection (6) hydrophobe est assemblée à la coque de passage de roue (1) par une colle thermoplastique.

3. Coque de passage de roue selon la revendication 1, **caractérisée en ce que** la couche de protection (6) hydrophobe est assemblée à la coque de passage de roue (1) par une fixation mécanique (par exemple, par aiguilletage).
